# EUROPEAN PATENT APPLICATION

(11) **EP 2 594 902 A2**
(43) Date of publication of application: **22.05.2013**
(21) Application number: 12192351.0
(22) Date of filing: 13.11.2012
(51) Int. Cl.: G01C 21/32, G01C 21/36, G06F 17/30, H03M 7/30

(54) **Retrieval terminal device, retrieval server device, retrieval tree compression method, and center-linked retrieval system**

(30) Priority: 16.11.2011 JP 2011250774
(71) Applicant: Clarion Co., Ltd., Saitama 330-0081 (JP)
(72) Inventor: Sekiguchi, Takaaki, Chiyoda-ku,, Tokyo 100-8220, (JP); Nagai, Yasushi, Chiyoda-ku,, Tokyo 100-8220, (JP); Osafune, Tatsuaki, Chiyoda-ku,, Tokyo 100-8220, (JP); Fukunaga, Ryoichi, Saitama-shi,, Saitama 330-0081, (JP); Imai, Taiki, Saitama-shi,, Saitama 330-0081, (JP)
(74) Representative: Calderbank, Thomas Roger

(57) **Abstract**

A retrieval tree data storing unit configured to store node information corresponding to the relationship between information configuring data to be retrieved and information of a lower layer configuring the data rather than the information and retrieval tree data corresponding to entity identification information for identifying entity data representing an entity of the data to be retrieved which is specified by the information or the lower information included in the node information; an input controlling unit configured to output a candidate of the data to be retrieved based on the information or the lower information inputted by a user and the node information stored in the retrieval tree data unit; and an entity data acquiring unit configured to transmit to the retrieval server device a retrieval request including the entity identification information corresponding to the information or the lower information included in the candidate of the data to be retrieved.

## Description

The present invention relates to a technology that reduces the size of retrieval data.

A car navigation system (hereinafter, referred to as a car navigation) provides traffic guide information to a user by processing map data. Models using a hard disk drive (HDD) as recording means of the map data are prevalent in the related art, but in recent years, models using a semiconductor device memory such as an SD memory card or a solid state drive (SSD) have become mainstream.

The semiconductor device memory has advantages in that power consumption is lower and impact-resistance is larger, but has a disadvantage in that a price per capacity is higher, than the HDD in the related art. As a result, in order to provide the car navigation to the user in the same price range as the related art, the capacity of the used semiconductor device memory needs to be smaller. However, a content of data required for an operation of the car navigation is not changed even though a recording medium is the HDD or the semiconductor device memory, and further, since the size of a database tends to increase every year due to maintenance, etc. of new roads or facilities, the technology of reducing the size of data recorded in the car navigation has been required at all times. As means of reducing the data size, the following technology is proposed.

First, as means generally used to reduce the data size without changing the content of the data, a data compression technology disclosed in Japanese Unexamined Patent Application Publication No. Hei 8(1996)-237138 is used. Since the data compression technology can easily reduce the data size, multiple compression methods have been proposed and have widely spread, in addition to the technology disclosed in Japanese Unexamined Patent Application Publication No. Hei 8(1996)-237138.

Further, as an additional technology of reducing the size of the data recorded in the car navigation, a technology disclosed in Japanese Unexamined Patent Application Publication No. 2003-207354 is used. In the technology, the data stored in the car navigation in the related art is stored in a server device connected through a communication network, and required data is sequentially downloaded from the server device to perform navigation. Since the data does not need to be stored in the car navigation by the technology, the capacity of the recording medium of the car navigation can be significantly reduced.

Further, as an additional technology of reducing the size of the data recorded in the car navigation, a technology disclosed in Japanese Unexamined Patent Application Publication No. 2001-304874 is used. In this technology, when retrieval is performed while information on newly maintained roads or stores after selling the car navigation is stored in the database of the server device connected through the communication network, in the case where the database in the car navigation is first retrieved and the corresponding facility is not discovered in the database within the car navigation, input retrieval conditions (genre, telephone numbers, names in alphabetical order) are transmitted to the server device and retrieval is performed in the database of the server device. When this technology is used, since the information on the newly maintained roads or stores need not be recorded in the car navigation after selling the car navigation, the capacity of the recording medium of the car navigation is enough if a capacity to record the database at the time of selling the car navigation is provided, and an increase in the size of the database by the maintained roads or facilities does not need to be considered after selling the car navigation.

However, the technologies disclosed in Japanese Unexamined Patent Application Publication Nos. Hei 8(1996)-237138, 2003-207354, and 2001-304874 have the following problems.

First, in the data compression technology disclosed in Japanese Unexamined Patent Application Publication No. Hei 8(1996)-237138, processing (hereinafter, referred to as decompressing) to return compressed data to an original state is required before referring to data. Since decompressing takes time, when the data is just compressed, performance when various navigations are performed by referring to the data deteriorates.

Further, in the technology disclosed in Japanese Unexamined Patent Application Publication No. 2003-207354, processing of acquiring data from the server device through the communication network is required before referring to data. With recent development of a data communication technology, a data communication speed is improved, but there is a problem when communication processing exerts significant influence on a user' s operability. As one example in which the communication processing greatly influences the user's operability, there is a function to retrieve addresses or facilities by inputting names. When data is retrieved by inputting the names in a general car navigation, whenever one character is input from a keyboard, a candidate name or the corresponding number is displayed, or a control to press only a key which is inputtable next is performed, in order to improve the user's operability. Since the processing is implemented by acquiring information from a retrieval database whenever one character is input, communication with the server device through the communication network occurs whenever one character is input, and in particular, in a device in which the communication means such as the car navigation is only low-speed mobile communication, the user's operability significantly deteriorates.

Further, in the technology disclosed in Japanese Unexamined Patent Application Publication No. 2001-304874, when data is retrieved, the database stored in the car navigation is first retrieved, and when the corresponding data is not provided in the database of the car navigation, the input retrieval conditions (genres, telephone numbers, names in alphabetical order, and the like) are transmitted to the server device and retrieval intends to be performed with the database of the server device, and this technology assumes that an inquiry on the database does not occur while a user inputs the retrieval conditions. However, as described above, a function to present the candidate name to the user whenever one character is input is difficult to be implemented by the technology disclosed in Japanese Unexamined Patent Application Publication No. 2001-304874 because an inquiry on the database inevitably occurs whenever one character is input.

From the above, a preferred aim of the present invention is to reduce the size of the database stored in the car navigation without damaging the user's operability during retrieval operation.

According to an aspect of the present invention, there is provided a retrieval terminal device connected to a retrieval server device through a communication network, including: a retrieval tree data storing unit configured to store node information corresponding to the relationship between information configuring data to be retrieved and information of a lower layer configuring the data than the information and retrieval tree data corresponding to entity identification information for identifying entity data representing an entity of the data to be retrieved which is specified by the information or the lower information included in the node information; an input controlling unit configured to output a candidate of the data to be retrieved based on the information or the lower information inputted by a user and the node information stored in the retrieval tree data unit; and an entity data acquiring unit configured to transmit to the retrieval server device a retrieval request including the entity identification information corresponding to the information or the lower information included in the candidate of the data to be retrieved, which is output by the input controlling unit and acquire the entity data identified by the entity identification information from the retrieval server device.

According to another aspect of the present invention, there is provided a retrieval server device receiving a retrieval request of data to be retrieved from a retrieval terminal device through a communication network, including: an entity data storing unit configured to store a plurality of entity identification information pieces for identifying entity data representing an entity of the data to be retrieved and the entity data which correspond to each other; and an entity data managing unit configured to retrieve the data to be retrieved from a plurality of entity data pieces stored in the entity data storing unit based on entity identification information for identifying the data to be retrieved which is specified by node information and lower information included in node information corresponding the relationship between the information configuring the data to be retrieved and the lower information configuring the data than the information and the number of candidates of the data to be retrieved which is specified by the information included in the node information or the lower information, which is included in the retrieval request.

According to yet another aspect of the present invention, there is provided a retrieval tree compressing method of compressing retrieval tree data, including: a node information listing step of listing a plurality of node information pieces corresponding to the relationship between information configuring data to be retrieved and lower information configuring the data than the information in a predetermined order; a node information classifying step of classifying the plurality of node information pieces listed by the node information listing step into two or more groups; and a node information compressing step of performing different data compression processing or uncompression processing to two or more respective groups classified in the node information classifying step, respectively.

According to still another aspect of the present invention, there is provided a center-linked retrieval system in which a retrieval terminal device and a retrieval server device are connected to each other through a communication network to retrieve data to be retrieved, in which the retrieval device includes: a retrieval tree data storing unit configured to store node information corresponding to the relationship between information configuring data to be retrieved and information of a lower layer configuring the data than the information and retrieval tree data corresponding to entity identification information for identifying entity data representing an entity of the data to be retrieved which is specified by the information or the lower information included in the node information; an input controlling unit configured to output a candidate of the data to be retrieved based on the information or the lower information inputted by a user and the node information stored in the retrieval tree data unit; and an entity data acquiring unit configured to transmit to the retrieval server device a retrieval request including the entity identification information corresponding to the information or the lower information included in the candidate of the data to be retrieved, which is output by the input controlling unit and acquire the entity data identified by the entity identification information from the retrieval server device, and the retrieval server device includes: an entity data storing unit configured to store a plurality of entity identification information pieces for identifying entity data representing an entity of the data to be retrieved and the entity data which correspond to each other; and an entity data managing unit configured to retrieve the data to be retrieved from a plurality of entity data pieces stored in the entity data storing unit, based on the entity identification information included in the node information and the number of candidates of the data to be retrieved which is specified by the information or the lower information, which is included in the retrieval request.

According to the embodiments of the present invention, the size of the database stored in the car navigation can be reduced without damaging user's operability during retrieval operation.

In the drawings:
FIG. 1 is an overall configuration diagram of a name candidate presented retrieval system (first embodiment);
FIG. 2 is an explanatory diagram of retrieval tree data (first embodiment);
FIG. 3 is an explanatory diagram of entity data (first embodiment);
FIG. 4 is an explanatory diagram of a retrieval menu screen (first embodiment);
FIG. 5 is a flowchart (first embodiment) illustrating an operation of a retrieval tree validity judging unit;
FIG. 6 is an explanatory diagram of a name input screen (first embodiment);
FIG. 7 is a flowchart illustrating an operation of a name input controlling unit (first embodiment);
FIG. 8 is a flowchart illustrating an operation of a node information acquiring unit (first embodiment);
FIG. 9 is a flowchart (first embodiment) illustrating an operation of a candidate information setting unit (first embodiment);
FIG. 10 is an explanatory diagram of a retrieval result acquiring screen (first embodiment);
FIG. 11 is a flowchart illustrating an operation of an entity data acquiring unit (first embodiment);
FIG. 12 is a configuration diagram of an entity data request message (first embodiment);
FIG. 13 is a configuration diagram of an entity data response message (first embodiment);
FIG. 14 is a flowchart illustrating an operation of an entity data managing unit (first embodiment);
FIG. 15 is an explanatory diagram of a retrieval tree data update screen (first embodiment);
FIG. 16 is a flowchart illustrating an operation of a retrieval tree data updating unit (first embodiment);
FIG. 17 is an overall configuration diagram of a keyboard controlled retrieval system (second embodiment);
FIG. 18 is an explanatory diagram of retrieval tree data (second embodiment);
FIG. 19 is an explanatory diagram of a name input screen (second embodiment); and
FIG. 20 is a flowchart illustrating an operation of a keyboard controlling unit (second embodiment).

### [First Embodiment]

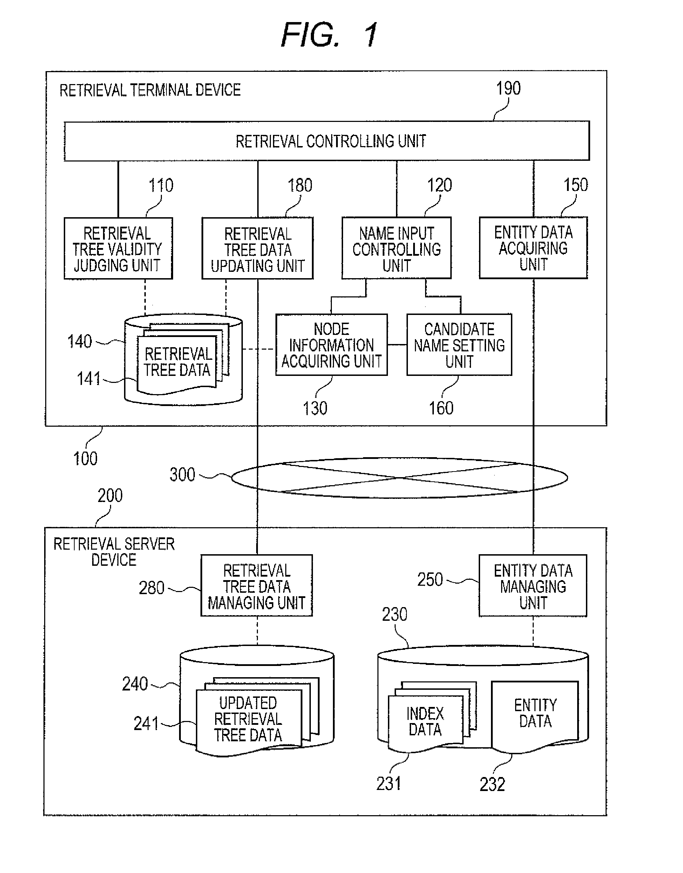

Hereinafter, a name candidate presented retrieval system of a first embodiment will be described with reference to FIGS. 1 to 16. Further, in the first embodiment and a second embodiment, an example of a system that retrieves data by inputting a name by the English alphabet is disclosed, but the present invention is not limited to using the English alphabet and if the name is retrieved by presenting a candidate, other languages such as Japanese, German, and French or figures (for example, a telephone number corresponding to the name) are applicable.

In the first embodiment, when a user retrieves facility information, a candidate facility name is displayed whenever the name is input by one character, the facility information is inquired to a retrieval server device at the time when the user selects a candidate name to display the result thereof on a screen.

FIG. 1 illustrates an overall configuration diagram of the name candidate presented retrieval system of the first embodiment. The system includes a retrieval terminal device 100, a retrieval server device 200, and a communication network 300.

The retrieval terminal device 100 includes a retrieval tree validity judging unit 110 configured to judge validity of retrieval tree data, a name input controlling unit 120 configured to control inputting of a name, a node information acquiring unit 130 configured to acquire node information from the retrieval tree data, a retrieval tree data recording unit 140 configured to record one or more of retrieval tree data pieces 141, an entity data acquiring unit 150 configured to inquire entity data to the retrieval server device based on information included in the node information, a candidate name setting unit 160 configured to display a candidate name included in the node information on a name input screen, a retrieval tree data updating unit 180 configured to update the retrieval tree data, and a retrieval controlling unit 190 configured to display various screens required for a series of retrieval operations.

The retrieval server device 200 includes an entity data recording unit 230 configured to record one or more of index data pieces 231 and entity data 232, an update retrieval tree data recording unit 240 configured to record one or more of the latest retrieval tree data pieces (update retrieval tree data) 241, an entity data managing unit 250 configured to process a retrieval request of the entity data, and a retrieval tree data managing unit 280 configured to transmit information of the retrieval tree data to the retrieval terminal device.

The communication network 300 corresponds to a communication network which is usable in a car navigation, such as a mobile phone network and a wireless communication network as a general communication network.

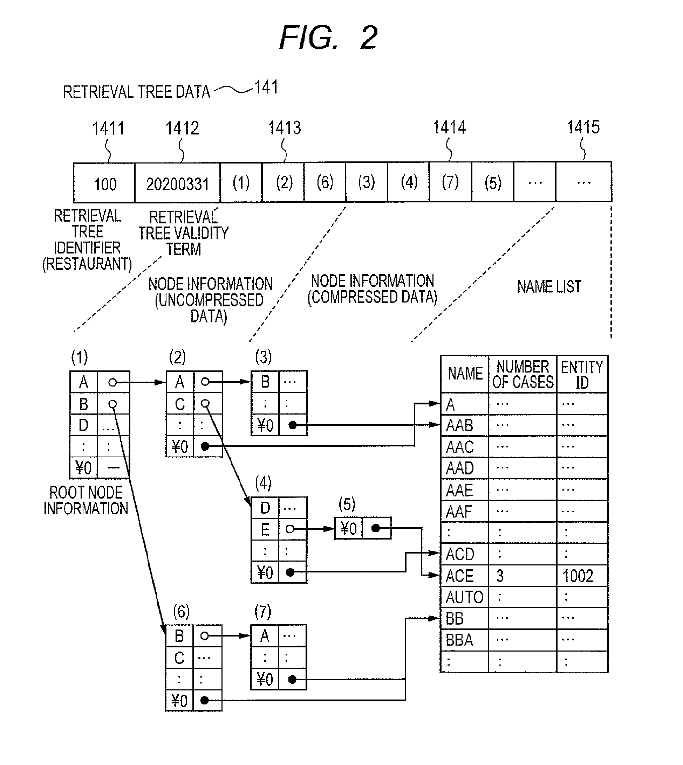

FIG. 2 discloses an example of the retrieval tree data 141 recorded in the retrieval tree data recording unit 140. The retrieval tree data 141 of the first embodiment includes a retrieval tree identifier 1411, a retrieval tree validity term 1412, node information (uncompressed data) 1413, node information (compressed data) 1414, and a name list 1415.

The retrieval tree identifier 1411 is an identifier indicating the type of retrieval tree. In the example of the drawing, "100" is stored and represents retrieval data of a restaurant. The retrieval tree validity term 1412 represents a validity term of the retrieval tree data 141, and the retrieval tree data of the drawing means data which is valid up to March 31, 2020.

The node information 1413 and 1414 list information of each node constituting the retrieval tree data 141. Characters and a list of information indicating the position of lower node information when the characters are input are stored in each node information piece. For example, node information (1) discloses information of first characters of all names and means that names in which first characters are "A", "B", and "D" are present. Similarly, node information (2) discloses information on a second character when the first character is "A", and means that a name in which the second character is "A" or "C" is present. Node information (3) discloses information on a third character when the first character is "A" and the second character is "A", and means that a name in which the third character is "B" is present.

Further, "¥0" which is a special control symbol is included in each node information piece, in addition to the general characters. "¥0" represents which part of the name list 1415 a candidate name corresponding to current node information starts. For example, "¥0" of the node information (2) represents that a candidate name when an input character string is "A" starts from a first row "A" of a name list, and "¥0" of the node information (3) represents that a candidate name when the input character string is "AA" starts from a second row "AAB" of the name list.

The above description is similarly applied even to other node information (4), (5), (6), and (7) disclosed in the drawing. Further, in the following description, the first node information (node information (1)) of the retrieval tree data is called root node information.

The node information 1413 and 1414 of the first embodiment is listed and recorded in a depth order of layers of the nodes (the order of characters constituting the character string). That is, the node information (1) corresponding to the first character, the node information (2) and (6) corresponding to the second character, the node information (3), (4), and (7) corresponding to the third character, and the node information (5) corresponding to a fourth character are recorded in sequence. Herein, the node information (3), (4), (7), and (5) (that is, the node information 1414) corresponding to the characters after the third character is stored in the retrieval tree data recording unit 140 in a data compressed state.

The name list 1415 stores retrievable names, and the number of cases and entity IDs required to inquire the names to the retrieval server device, which are listed and stored in alphabetical order of the names.

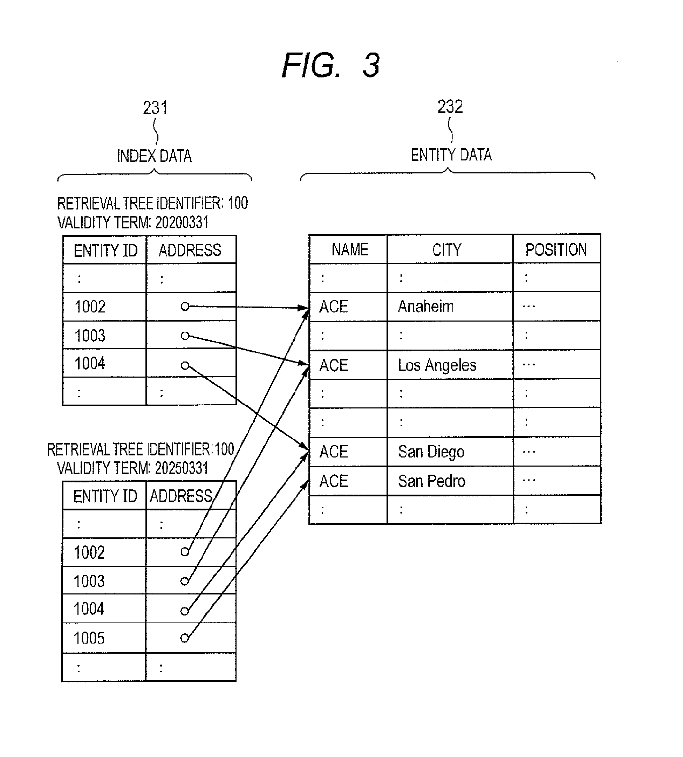

FIG. 3 illustrates examples of the index data 231 and the entity data 232 recorded in the entity data recording unit 230. The index data 231 holds the retrieval tree identifier, the validity term, and the entity ID, and information on an address in entity data in a table format. In the drawing, two index data pieces are disclosed, and one is index data of which the validity term is up to March 31, 2020 and the other is index data of which the validity term is up to March 31, 2025. The index data of which the validity term is up to March 31, 2025 means that a facility having a name "ACE" is newly maintained, and is added with an entity ID 1005. Entity data 232 holds the names and various pieces of information subordinated to the names in the table format, and in an example of the drawing, a city name and positional information are disclosed.

Hereinafter, the first embodiment will be described according to a processing flow when the user performs the retrieval operation.

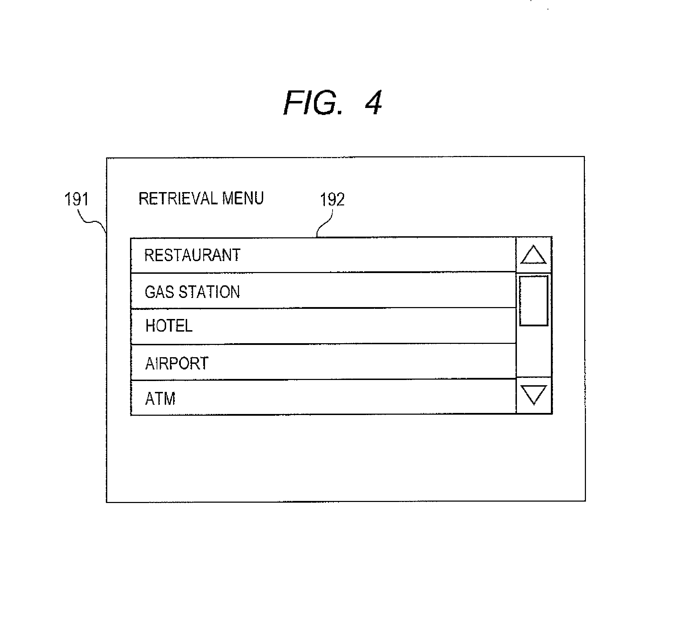

FIG. 4 is an explanatory diagram of a retrieval menu screen which the retrieval controlling unit 190 displays at a first stage of the retrieval operation. On the retrieval menu screen 191, names 192 of retrievable classifications (restaurant, a gas station, and the like) are displayed as a list. The user selects a desired classification to be retrieved on the displayed list.

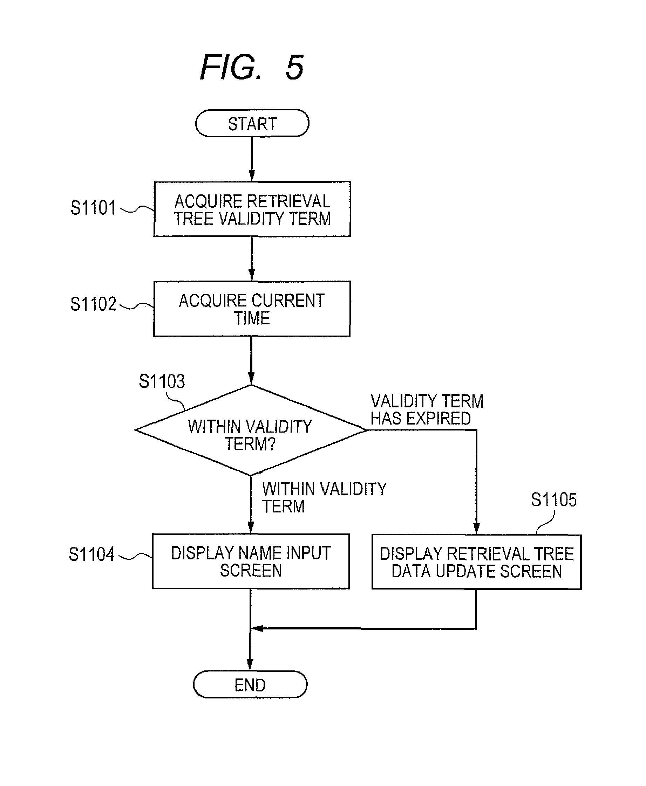

FIG. 5 is a flowchart illustrating an operation of the retrieval tree validity judging unit 110, which is executed after the user selects one of the classifications. The retrieval tree validity judging unit 110 refers to the retrieval tree data 141 corresponding to the selected classification and acquires the retrieval tree validity term 1412, from the retrieval tree data recording unit 140 (step S1101). Subsequently, the retrieval tree validity judging unit 110 acquires a current time set in the retrieval terminal device 100 (step S1102). Further, the current time may be acquired from a clock device such as a general CMOS clock and acquired by using time information acquired from a global positioning system (GPS) in the case of the car navigation.

Subsequently, the retrieval tree validity judging unit 110 compares the retrieval tree validity term 1412 acquired in steps S1101 and S1102 with the current time to judge the validity of the retrieval tree data 141 (step S1103). Further, the retrieval tree validity judging unit 110 instructs the display of the name input screen 121 to the retrieval controlling unit 190 when the current time is within the validity term (step S1104). Meanwhile, the retrieval tree validity judging unit 110 instructs the display of the retrieval tree data update screen 181 to the retrieval controlling unit 190 when the current time is over the validity term (step S1105). In addition, a processing flow of updating the retrieval tree data will be described below.

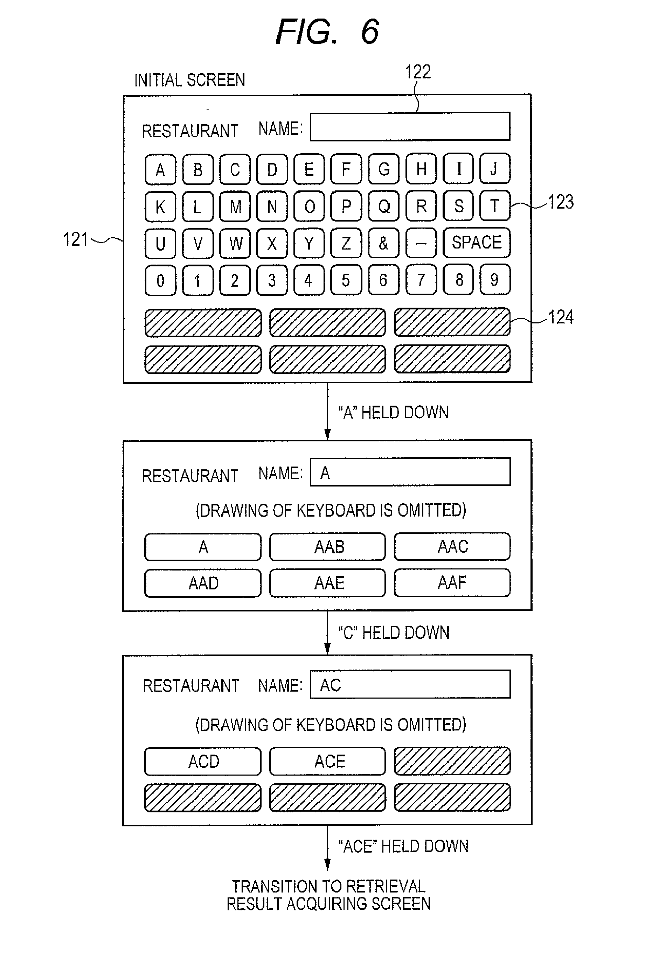

FIG. 6 is an explanatory diagram of the name input screen 121 displayed when the retrieval data is within the validity term. The name input screen 121 of the first embodiment is constituted by a name input column 122 in which the names are input, a keyboard 123 for inputting the characters, and a plurality of candidate name buttons 124 for displaying the candidate names. The candidate name button 124 also serve as a retrieval button that starts the inquiry to the retrieval server device when the user presses the button 124 as well as displaying the candidate names.

An operation of the name input screen 121 is as follows. First, when the user inputs the character "A" by using the keyboard 123, "A", "AAB", "AAC", "AAD", "AAE", and "AAF" which are the candidate names are displayed on six candidate name buttons 124, respectively as well as "A" is displayed in the name input column 122. Subsequently, when the user inputs the character "C" by using the keyboard 123, "ACD" and "ACE" which are candidate names are displayed on two candidate name buttons 124, respectively.

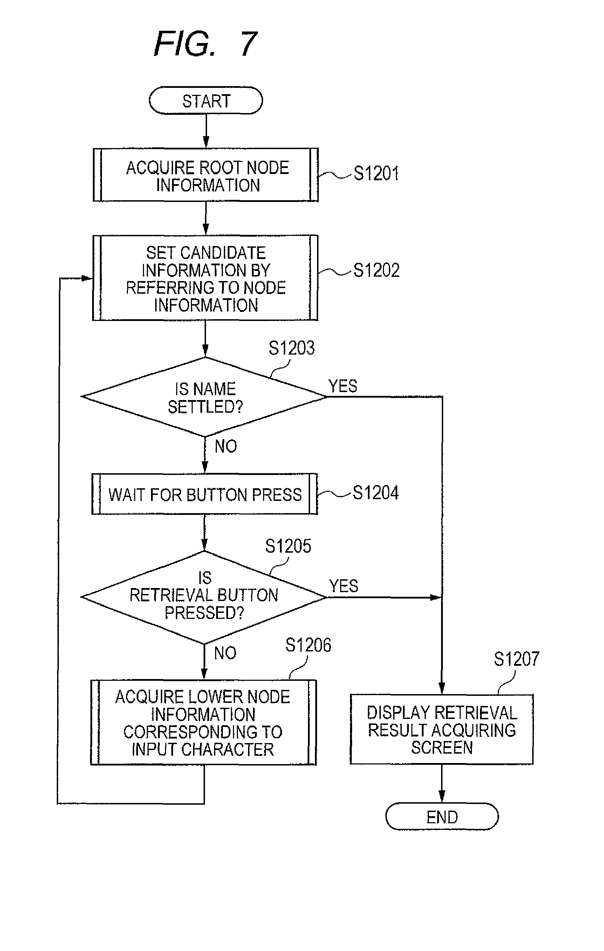

FIG. 7 is a flowchart illustrating an operation of the name input controlling unit 120 for performing the operation. The name input controlling unit 120 first instructs acquisition of the root node information to the node information acquiring unit 130 (step S1201). An operation of the node information acquiring unit 130 will be described below. Subsequently, the name input controlling unit 120 instructs setting of the candidate name to the candidate name button 124 of the name input screen 121, to the candidate name setting unit 160 (step S1202) . An operation of the candidate name setting unit 160 will be described below. Subsequently, the name input controlling unit 120 judges whether or not a retrieval target name is determined as a result of processing of the candidate name setting unit 160 (step S1203). Further, the determination of the name means a state in which the user need not input the name any longer, such as a case in which a corresponding name is not present even though the next character is input.

The name input controlling unit 120 waits for pressing of the button by the user when the name is not determined as the result of judgment of step S1203 (step S1204). When the button is pressed, the name input controlling unit 120 first judges whether the pressed button is the candidate name button 124 (retrieval button) (step S1205). Meanwhile, when the pressed button is not the candidate name button 124 (retrieval button), that is, when the character is input by using the keyboard 123, the name input controlling unit 120 instructs acquisition of node information corresponding to the pressed character among lower node information of the node information which is completely acquired, to the node information acquiring unit 130 (step S1206). The name input controlling unit 120 acquires the lower node information and thereafter, repeats the processing from step S1202. During the repeated processing, when it is judged that the name is determined in step S1203 and when the candidate name button (retrieval button) 124 is pressed in step S1205, the name input controlling unit 120 acquires the number of cases and an entity ID corresponding to the pressed candidate name button (retrieval button) 124 from the candidate name setting unit 160, notifies the number of cases and the entity ID to the retrieval controlling unit 190 to instruct the display of the retrieval result acquiring screen 151 (step S1207).

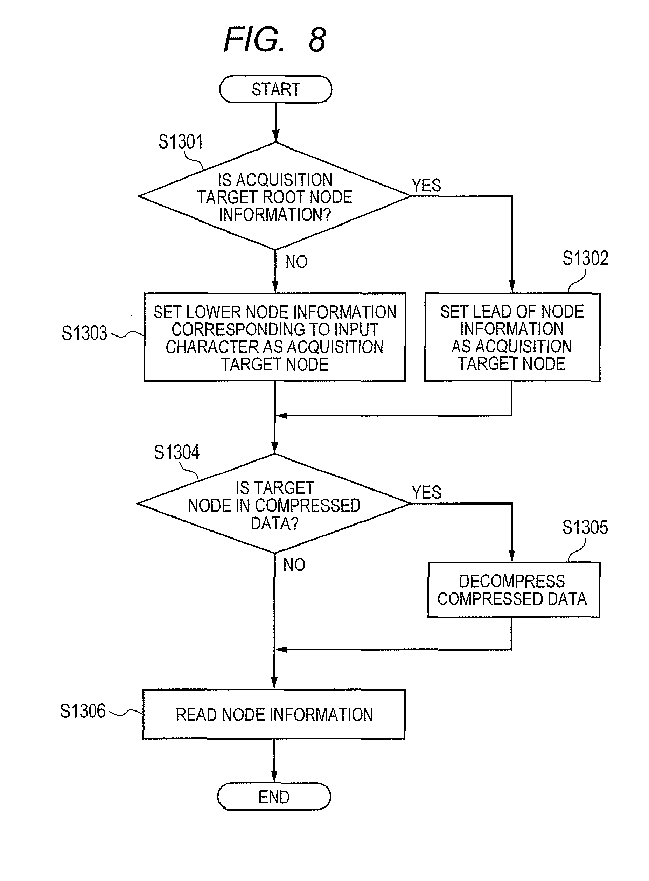

FIG. 8 is a flowchart illustrating an operation of the node information acquiring unit 130, which is executed in steps S1201 and S1206 of FIG. 7. The node information acquiring unit 130 first judges whether or not a node receiving the instruction of acquisition from the name input controlling unit 120 is the root node information (step S1301). The node information acquiring unit 130 judges whether or not the character corresponding to the node receiving the instruction of the acquisition from the name input controlling unit 120 is included in the node information (1) illustrated in FIG. 1, that is, the root node information to judge the root node information.

When the instruction of the acquisition of the root node information is received, the node information acquiring unit 130 sets a first node of the node information 1413 included in the retrieval tree data 141 as the acquisition target node (step S1302). When acquisition of not the root node information but the lower node information is received, the node information acquiring unit 130 sets as node information corresponding to an input character as the acquisition target node in the lower node information included in the currently acquired node information (step S1303).

Subsequently, the node information acquiring unit 130 judges which information of the node information (uncompressed data) 1413 and the node information (compressed data) 1414 the acquisition target node is included in (step S1304). The judgment is achieved by verifying how many characters there are before the character that the acquisition target node corresponds to. That is, as described in FIG. 2, in the retrieval tree data 141of the first embodiment, since a node corresponding to a character after the third character of the name is compressed, when the acquisition target node corresponds to the character after the third character, it is judged that the acquisition target node is included in the compressed data. Subsequently, when the acquisition target node information is included in the node information (compressed data) 1414, the node information acquiring unit 130 decompresses the compressed data (step S1305). Finally, the node information acquiring unit 130 reads the acquisition target node information from the retrieval tree data 141 (S1306).

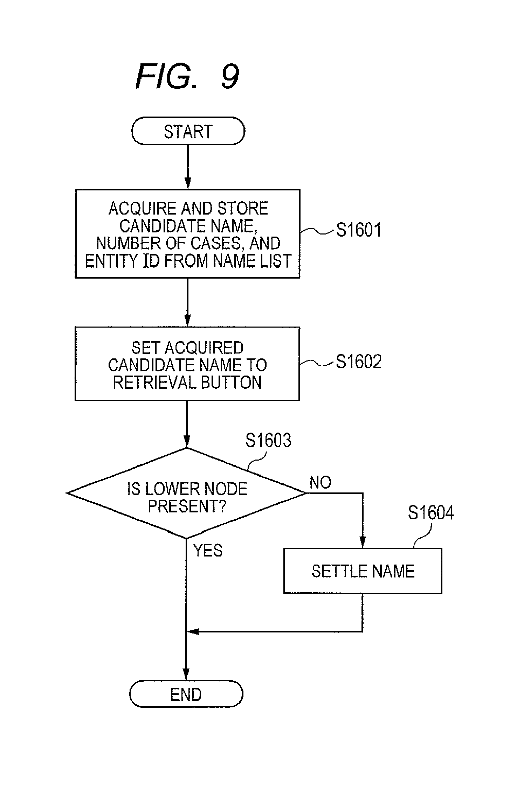

FIG. 9 is a flowchart illustrating an operation of the candidate name setting unit 160, which is executed in step S1202 of FIG. 7. The candidate name setting unit 160 first acquires and stores the candidate name, the number of cases, and the entity ID from the position on the name list 1415 represented by the control symbol "¥0" included in the node information, by referring to the node information acquired by the node information acquiring unit 130 (step S1601). The acquiring is achieved by reading up to a row just before a row where a lead of the name does not coincide with the input character string downward from a start position in the name list represented by the node information by setting the number of (six) candidate name buttons (retrieval buttons) 124 included in the name input screen 121 as the upper limit. For example, when the input character string is "AC", up to a 9th row just before a 10th row ("AUTO") where the lead of the name does not coincide with the input character string "AC", from an 8th row ("ACD") of the name list displayed by the node information (4) are acquired as the candidate names.

Subsequently, the candidate name setting unit 160 sets the acquired candidate names with respect to the candidate name buttons (retrieval buttons) 124, respectively (step S1602). Subsequently, the candidate name setting unit 160 judges whether or not the lower node information is included in the node information acquired by the node information acquiring unit 130 (step S1603). When the lower node information is not present, the candidate name setting unit 160 notifies to the name input controlling unit 120 that the name is determined (step S1604).

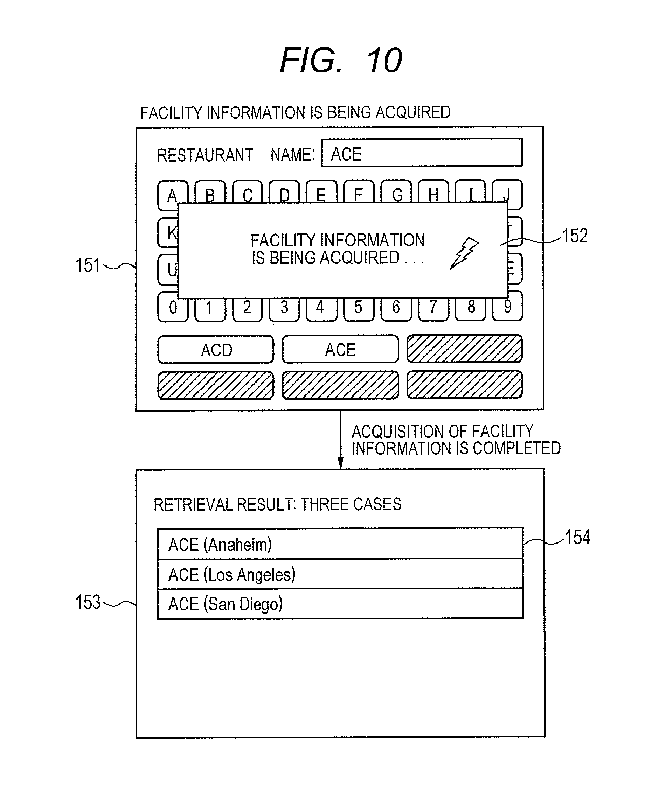

FIG. 10 is an explanatory diagram of the retrieval result acquiring screen 151, which is displayed as the result of execution of step S1207 of FIG. 7. In the drawing, data associated with the name "ACE" is inquired to the retrieval server device. The retrieval terminal device 100 displays a pop-up message 152 representing that information is acquired from the retrieval server device 200, on the retrieval result acquiring screen 151, at the time of starting the inquiry on the name "ACE". Further, in the present invention, a form representing while the information is acquired from the retrieval server device 200 is not limited to the pop-up message 152, but a method generally used to notify to the user that the system is in communication, such as a case where a screen of a mobile phone used for connection with the communication network 300 is changed to a communication state may be used. After the inquiry result is acquired from the retrieval server device 200, a retrieval result display screen 153 is displayed and a result list 154 is displayed. The user selects data to be targeted from the displayed list to set the data as a destination of the car navigation or verify detailed information.

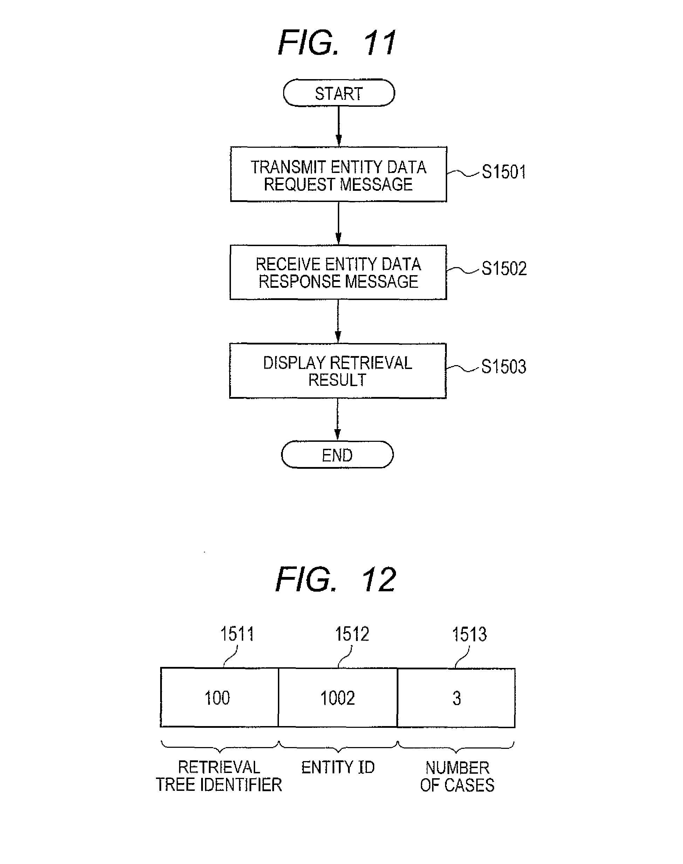

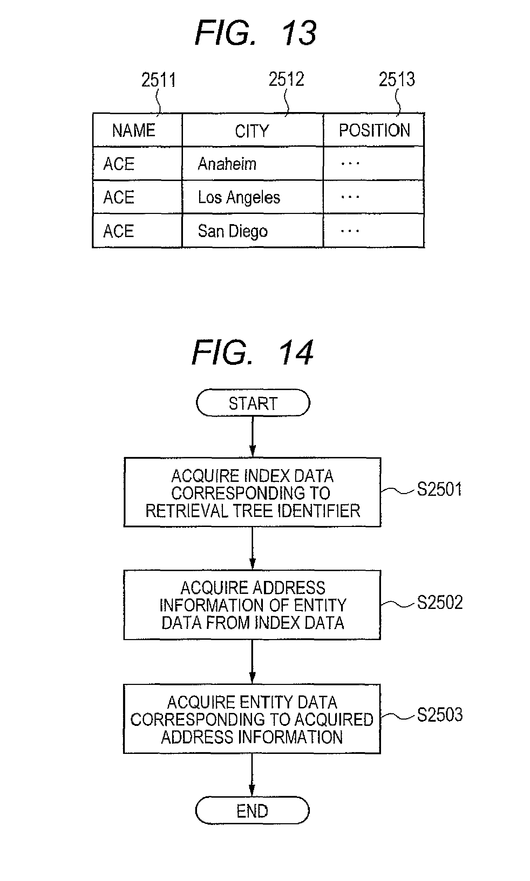

FIG. 11 is a flowchart illustrating an operation of the entity data acquiring unit 150 for performing the operation. The entity data acquiring unit 150 first transmits an entity data request message to be illustrated in FIG. 12 to the entity data managing unit 250 through the communication network 300 (step S1501). Subsequently, the entity data acquiring unit 150 receives an entity data response message to be illustrated in FIG. 13, from the entity data managing unit 250 through the communication network 300 (step S1502). After receiving the entity data response message, the entity data acquiring unit 150 displays information included in the acquired entity data on the retrieval result display screen 153 (step S1503).

FIG. 12 is a configuration diagram of the entity data request message transmitted in step S1501 of FIG. 11. The entity data request message is constituted by a retrieval tree identifier 1511, an entity ID 1512, and a number-of-cases 1513.

FIG. 13 is a configuration diagram of the entity data response message received in step S1502 of FIG. 11. The entity data response message includes a plurality of names 2511, a city name 2512, and positional information 2513.

FIG. 14 is a flowchart illustrating an operation of the entity data managing unit 250 when the entity data request message of FIG. 12 is received. The entity data managing unit 250 first acquires the corresponding index data 231 by referring to the retrieval tree identifier 1511 included in the entity data request message (step S2501). Subsequently, the entity data managing unit 250 acquires from the index data 231 address information corresponding up to an entity ID acquired by subtracting 1 from a value acquired by adding the number-of-cases 1513 to a value represented by the entity ID 1512, from the value represented by the entity ID 1512, by referring to the entity ID 1512 and the number-of-cases 1513 included in the entity data request message (step S2502).

For example, in the case of the entity data request message illustrated in FIG. 12, the entity data managing unit 250 acquires the address information corresponding to three entity IDs 1002, 1003, and 1004. Finally, the entity data managing unit 250 acquires data corresponding to the acquired address information from the entity data 232 (step S2503). The acquired entity data is transmitted to the data acquiring unit 150 as the entity data response message illustrated in FIG. 13, which is displayed on the retrieval result display screen 153. The above is the flow of the retrieval processing by the name candidate presented retrieval system of the first embodiment.

Subsequently, in step S1103 of FIG. 5 described above, update processing of the retrieval tree data which is executed when the retrieval tree data is not within the validity term will be described.

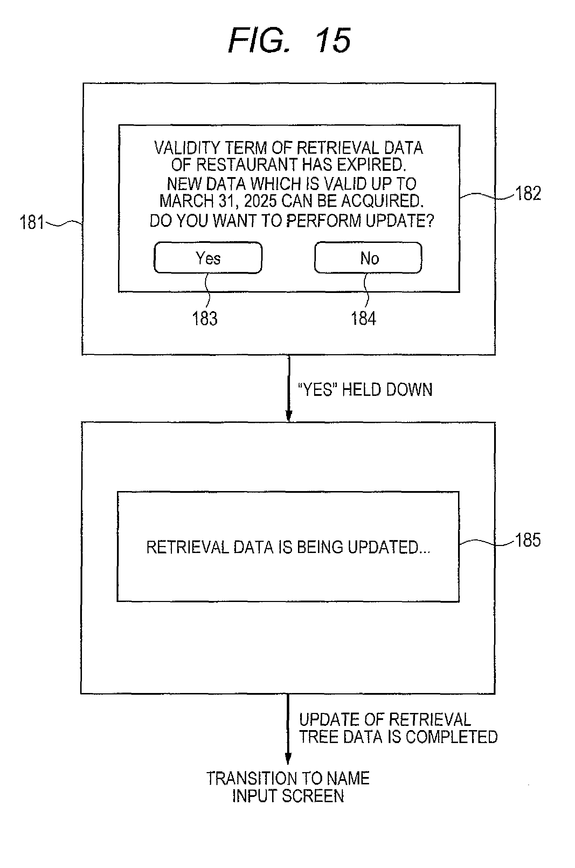

FIG. 15 is an explanatory diagram of the retrieval tree data update screen 181, which is displayed when the retrieval data is not within the validity term. The retrieval tree data update screen 181 is constituted by a pop-up message 182 to notify to the user that the validity term of the retrieval tree data is terminated, and buttons 183 and 184 for the user to select whether or not updating is continued. On this screen, when the "Yes" button 183 is pressed, the pop-up message 185 to notify to the user that the retrieval tree data is being updated is displayed, and after the updating of the retrieval tree data is completed, the name input screen 121 illustrated in FIG. 6 is displayed. When the user presses the "No" button 184, the process returns to the retrieval menu screen 191 illustrated in FIG. 4.

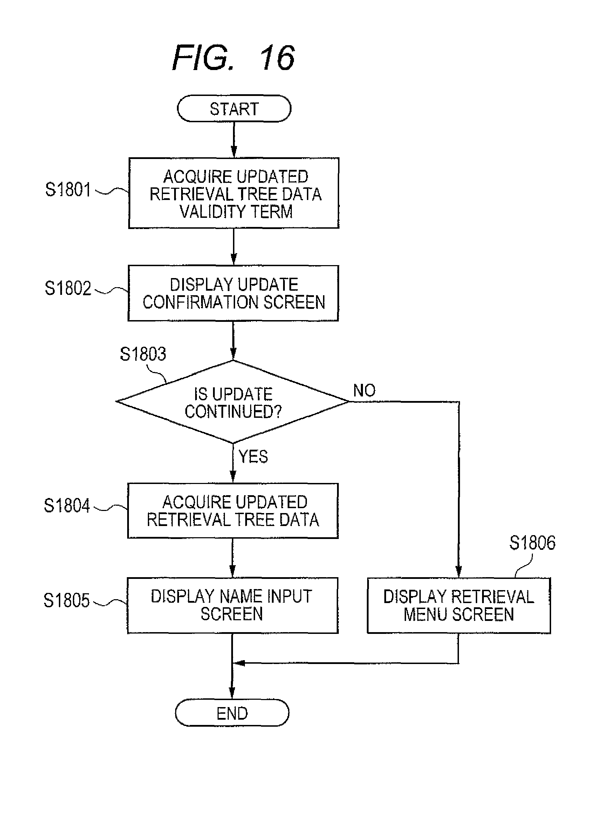

FIG. 16 is a flowchart illustrating an operation of the retrieval tree data updating unit 180 for performing the operation. The retrieval tree data updating unit 180 first acquires a validity term of new retrieval tree data through the communication network 300 (step S1801). The processing is implemented by the retrieval tree data managing unit 280 by transmitting the retrieval tree identifier 1411 included in the retrieval tree data 141 to the retrieval tree data managing unit 280 and returning a validity term of the latest update retrieval tree data 241 having the same retrieval tree identifier as the received retrieval tree identifier 1411. Subsequently, the retrieval tree data updating unit 180 displays the received validity term on the screen and inquires to the user whether or not the retrieval tree data is updated (steps S1802 and S1803). When the user selects updating continuation, the retrieval tree data updating unit 180 transmits the retrieval tree identifier 1411 to the retrieval tree data managing unit 280 through the communication network 300, and acquires the latest update retrieval tree data 241 to record the acquired latest update retrieval tree data 241 in the retrieval tree data recording unit 140 (step S1804). The retrieval tree data updating unit 180 updates the retrieval tree data and thereafter, instructs the display of the name input screen 121 to the retrieval controlling unit 190 (step S1805). When the user does not select the updating continuation in step S1803, the retrieval tree data updating unit 180 instructs the display of the retrieval menu screen 191 to the retrieval controlling unit 190 (step S1806). The above is the flow of the retrieval tree data update processing by the name candidate presented retrieval system of the first embodiment.

By a content described above, since the retrieval tree data for displaying the candidate name is stored in the retrieval terminal device and communication processing does not thus occur, the user' s operability at the time of inputting the name is not impaired. Further, when the node information is acquired from the retrieval tree data, since the compressed data is decompressed in step S1305 of FIG. 8 only when the user inputs characters after the third character, operability does not deteriorate by decompressing the compressed data up to an input of the second character. In addition, in the embodiment, the node information corresponding after the third character is set as a compressed target, but the compression target is not limited to the node information after the third character, but may be set in accordance with a distribution of the lengths of the names included in the retrieval data.

In detail, node information, which is included in a range where a time required to decompress the compressed data is equal to or less than a predetermined threshold according to a distribution of character numbers included in the node information of each layer in the node information constituting the retrieval tree data 141 illustrated in FIG. 2, may be set as the compression target. For example, the distribution of the character numbers included in the respective node information is acquired, like a character number n (2) included in the node information (2) similarly thereto, in addition to A and C , a character number n (3) included in the node information (3) similarly thereto in addition to B, and a character number n (4) included in the node information (4) similarly thereto in addition to D and E, and node information in a range of a comparatively small character number in the distribution is set as node information that satisfies a condition in which the decompressing time of the compressed data is equal to or less than a predetermined threshold value, and the node information may be set as the compression target. By determining data as the compression target according to the distribution of the character numbers included in the node information, the compressed data may be more flexibly set by considering the decompressing time.

Further, by the content described above, since the entity data referred to from the retrieval tree data may be stored in the retrieval server device, the size of the data stored in the retrieval terminal device may be reduced.

### [Second Embodiment]

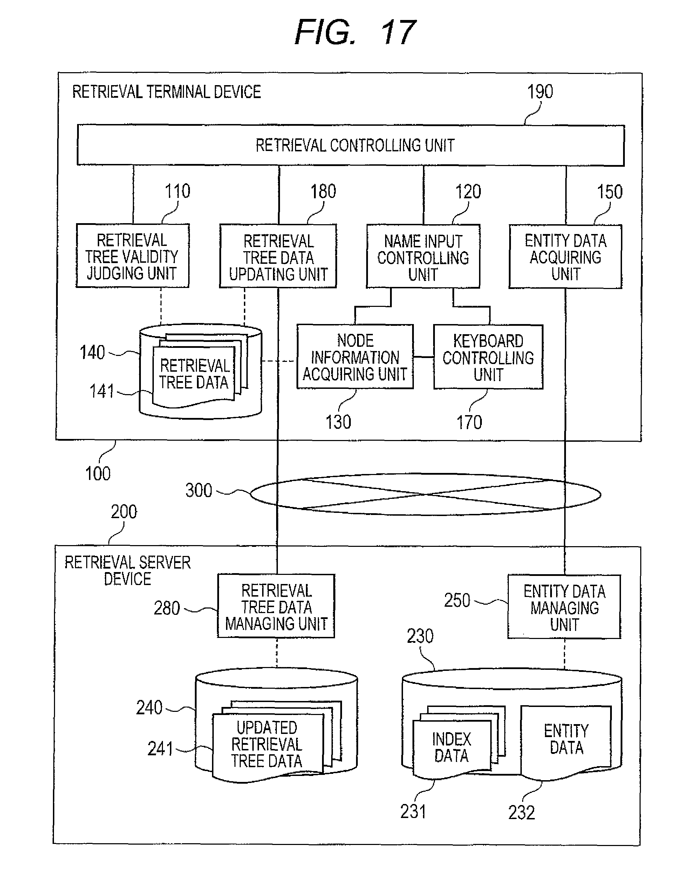

Hereinafter, a keyboard controlled retrieval system of a second embodiment will be described with reference to FIGS. 17 to 20. In the second embodiment, when the user retrieves the facility information, a display of the corresponding number of cases and a control to enable only a key corresponding to a character which is inputtable next to be pressed is performed whenever the tile is input by one character, and the facility information is inquired to the retrieval server device and the result is displayed on the screen at the time when the user presses the retrieval button.

FIG. 17 illustrates an overall configuration diagram of the keyboard controlled retrieval system of the second embodiment. A basic configuration is the same as that of the first embodiment, but differences from the first embodiment are in that the candidate name setting unit 160 in FIG. 1 is not present, a keyboard controlling unit 170 is newly added, and the configuration of the retrieval tree data 141 recorded in the retrieval tree data recording unit 140 of FIG. 1 is changed to retrieval tree data 142. The second embodiment is basically the same as the first embodiment in terms of other parts.

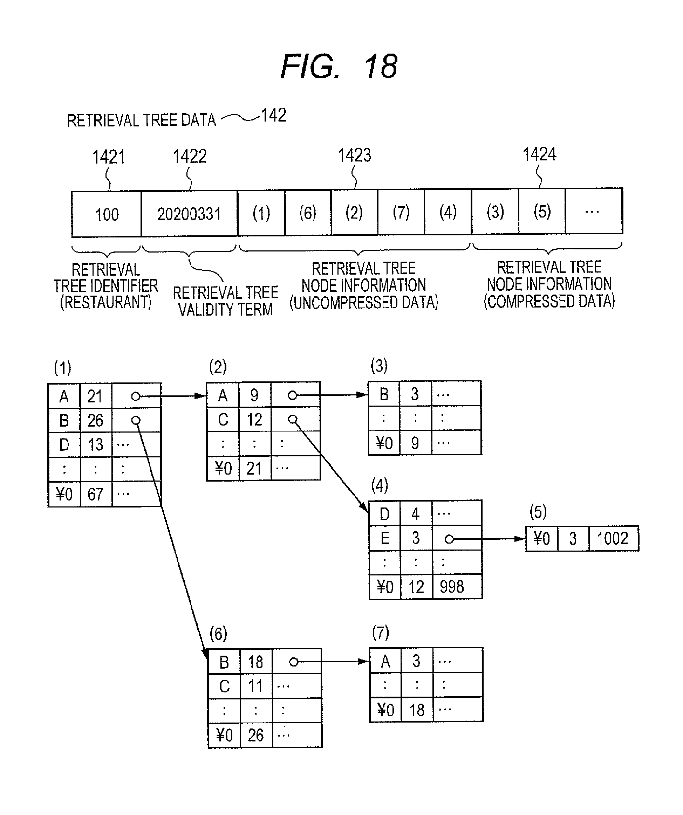

FIG. 18 illustrates an example of the retrieval tree data 142 in the second embodiment. The retrieval tree data 142 of the second embodiment includes a retrieval tree identifier 1421, a retrieval tree validity term 1422, node information (uncompressed data) 1423, and node information (compressed data) 1424. The second embodiment is the same as the first embodiment in the retrieval tree identifier 1421 and the retrieval tree validity term 1422.

The node information 1423 and 1424 list information of each node constituting the retrieval tree data 142. Characters, the number of cases when the characters are input, and a list of information indicating the position of lower node information when the characters are input are stored in each node information piece. For example, the node information (1) represents that the number of cases when "A" is input is 21 and the number when "B" is input is 26. It is the same in other characters.

Further, "¥0" which is a special control symbol is included in each node information piece, in addition to the general characters. When the character is "¥0", a value acquired by adding up the numbers of all characters included in the node information is stored in a column in which the corresponding number of cases is stored, and an entity ID corresponding to the node information is recorded in a column representing the position of the lower node information. For example, the node information (4) is node information acquired when the user inputs the characters in the order of "AC", and means that the number of cases when the input is "AC" is 12 and the entity ID in the case is 998.

Each node information piece constituting the node information (uncompressed data) 1423 and the node information (compressed data) 1424 of the second embodiment is listed and recorded in the order of the number represented by "¥0". That is, the node information (1) of which the largest number of cases is 67 is disposed at the lead and subsequently, the node information (6) of which the number is 26 is disposed. It is the same even with respect to subsequent nodes. Herein, the node information (3) and (5) of which the number of cases is 10 or less is stored in the retrieval tree data recording unit 140 in the data compressed state.

Hereinafter, the second embodiment will be described according to a processing flow when the user performs the retrieval operation. A flow until the name input screen is displayed is the same as that of the first embodiment.

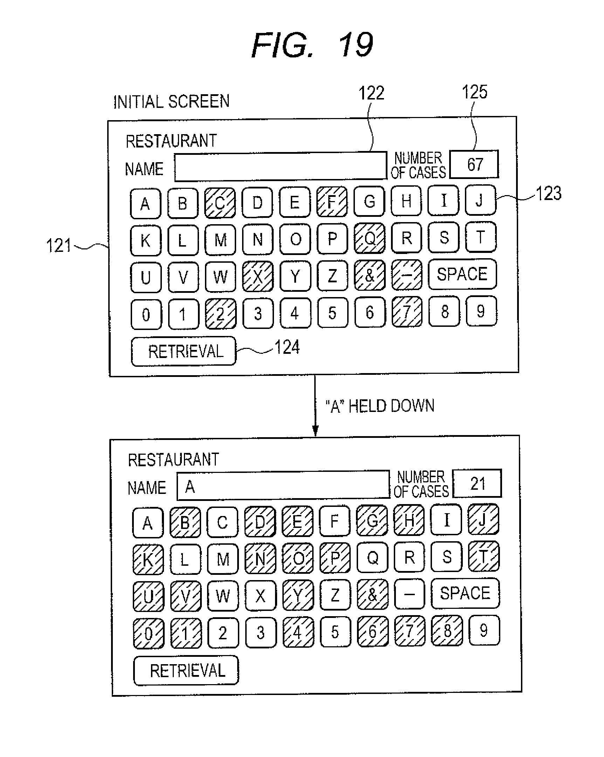

FIG. 19 is an explanatory diagram of the name input screen 121 displayed in the keyboard controlled retrieval system of the second embodiment. The name input screen 121 includes the name input column 122 of inputting the names, the keyboard 123 for inputting the characters, and the retrieval button 124, similarly as the first embodiment. Further, the retrieval button 124 displays the candidate names in the first embodiment, but displays "retrieval" as a name of the button in the second embodiment. Further, the name input screen 121 of the second embodiment includes a number displaying column 125 displaying the number of input names.

In an initial screen illustrated in FIG. 19, "67" is displayed in the number-of-cases displaying column 125. This represents that the number of retrievable data pieces is 67. Some buttons such as buttons "C", "F", and "Q" of the keyboard 123 are set in an unpressable state. This represents that no name in which the first character starts as "C", "F", and "Q" is present in the database (retrieval tree data 142). In this state, when the user inputs "A" by using the keyboard 123, the value of the number-of-cases displaying column 125 is changed to "21" and further, the keyboard 123 is set in a state in which some buttons such as buttons "B", "D", and "E" are unpressable. This represents that the number of cases in which the first character is "A" is 21 and a name in which the first character is "A" and the second character is "B", "D", and "E" is not present in the database. As such, in the keyboard controlled retrieval system of the second embodiment, whenever the user inputs one character, the display of the number of cases and the control to enable only the key which is inputtable next to be pressed are performed.

Operations of the name input controlling unit 120, the node information acquiring unit 130, and the keyboard controlling unit 170 will be described below with respect to processing for performing the operation illustrated in FIG. 19.

The operation of the name input controlling unit 120 is the same as that of the first embodiment, except that the configuration that instructs the setting of the candidate name to the candidate name setting unit 160 in step S1202 of FIG. 7 is changed to processing to instruct the display of the number of cases and the control of the keyboard to the keyboard controlling unit 170.

The operation of the node information acquiring unit 130 is the same as that of the first embodiment, except that a reference for judging whether or not the acquisition target node is present in the compressed data in step S1304 of FIG. 8 is how many characters of the name there are before the character that the target node corresponds to in the first embodiment, while as the reference, whether the number of cases corresponding to the target node is 10 or less is used in the second embodiment.

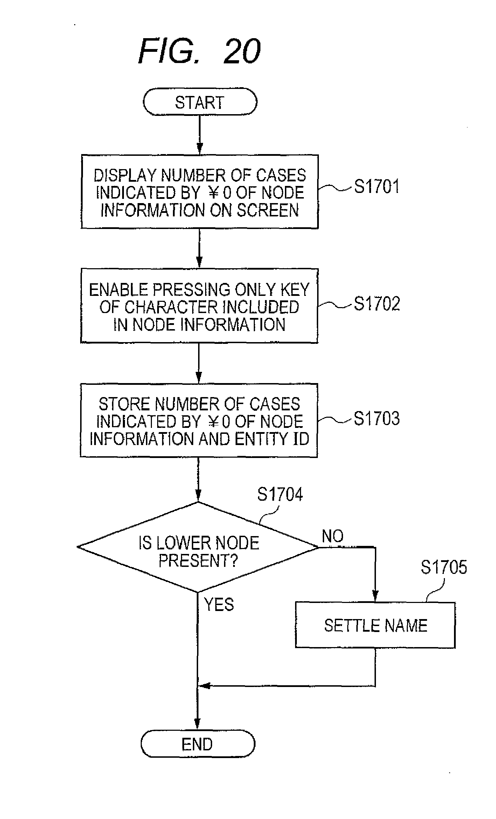

In regard to the keyboard controlling unit 170, a flowchart illustrating the operation of the keyboard controlling unit 170 is illustrated in FIG. 20. The keyboard controlling unit 170 first displays the number of cases indicated by "¥0" of the node information acquired by the node information acquiring unit 130 in the number displaying column 125 of the name input screen 121 of the second embodiment (step S1701). Subsequently, the keyboard controlling unit 170 is set to press only the key corresponding to the character included in the node information in the keyboard 123 (step S1702). Subsequently, the keyboard controlling unit 170 stores the number of cases and the entity ID represented by "¥0" of the node information (step S1703). Subsequently, the keyboard controlling unit 170 judges whether or not the lower node information is included in the node information (step S1704). When the lower node information is not present, the keyboard controlling unit 170 notifies to the name input controlling unit 120 that the name is determined (step S1705).

In the name input controlling unit 120, when the name is determined in step S1203 of FIG. 7 or when the retrieval button 124 is pressed in step S1205, as in the first embodiment, the keyboard controlling unit 170 acquires the number of cases and the entity ID which are stored, and notifies the acquired number of cases and entity ID to the retrieval controlling unit 190 to instruct the display of the retrieval result acquiring screen 151. Thereafter, processing of acquiring a retrieval result from the retrieval server device by using the number of cases and the entity ID is the same as that of the first embodiment.

By the content described above, since the retrieval tree data for displaying the number of cases whenever the user inputs one character and performing the control to enable only the key which is inputtable next to be pressed is stored in the retrieval terminal device and thus communication processing does not thus occur, the user's operability is not impaired. Further, the compressed data is decompressed at the time of acquiring the node information from the retrieval tree data only when the number of cases is 10 or less, and as a result, when the retrieval button 124 is pressed in a state in which the number is more than 10, operability by decompressing the compressed data does not deteriorate. In addition, the node information in which the number of cases is equal to or less than 10 is set as the compression target in the embodiment, but the number of cases is not limited to 10 or less and may be set according to the number of case included in the retrieval data.

In detail, node information of the number of cases in which a time required to decompress the compressed data is equal to or less than a predetermined threshold according to the number of characters included in the node information of each layer in the node information constituting the retrieval tree data 142 illustrated in FIG. 18 may be set as the compression target. For example, the number included in each node information is acquired, like 67 which is the number represented by "¥0" in the node information (1), 21 which is number represented by "¥0" in the node information (2), 9 which is the number represented by "¥0" in the node information (3), 12 which is number represented by "¥0" in the node information (4), 3 which is the number represented by "¥0" in the node information (5), 26 which is the number represented by "¥0" in the node information (6), and 18 which is the number represented by "¥0" in the node information (7), and the node information is listed in the order in which the number is larger, and node information of the comparatively small number (for example, three lower node information in which the number is small) is set as node information to satisfy the condition in which the decompressing time of the compressed data is equal to or less than the predetermined threshold value, and the node information may be set as the compression target. As such, by determining data as the compression target according to the number of characters included in the node information, the compressed data may be more flexibly set by considering the decompressing time.

Further, as in the first embodiment, since the entity data referred to from the retrieval tree data may be stored in the retrieval server device, the size of the data stored in the retrieval terminal device may be reduced.

In addition, in the first embodiment and the second embodiment described above, node information in which the layer is deeper than any layer (for example, node information corresponding to a character displayed when the retrieval result is sufficiently narrowed) in the node information included in the retrieval tree data is referred to as node information which is small in the number, that is, node information of which a referred frequency is low, and as a result, only the node information may be set as the compression target. In this case, since node information of which a reference frequency is high is not compressed, an occurrence frequency of a stand-by time which is generated according to the decompressing of the compressed data may be reduced and user convenience may be further improved.

As such, as illustrated in the first embodiment and the second embodiment, for example, data (retrieval tree data) required whenever the user inputs one character as the name of the retrieval target is stored in the car navigation in the database required to retrieve the facility data, and an entity (data of a facility name, an address, a telephone number, and the like, that is, entity data) of the retrieval data referred to from the retrieval tree data is stored in an external retrieval server device connected through the communication network, processing to improve the user's operability at the time of inputting the name is executed by referring to the retrieval tree data stored in the car navigation, and the entity data is inquired to the retrieval server device at the time when the user instructs retrieval execution or at the time when the retrieval tree data is referred to, and as a result, it may be judged that more characters does not need to be inputted, and the result is displayed on the screen of the car navigation. As such, the data which significantly influences the user's operability is stored in the car navigation to reduce the size of the database stored in the car navigation without impairing the user's operability.

Further, the retrieval tree data stored in the car navigation is partially compressed. For example, when the user inputs the name of the retrieval target, a long name is rarely input to the end and in general, there are many cases in which the retrieval processing is executed at the time when a predetermined length is input to select a name to be targeted from a result list. That is, there are many cases in which a node corresponding to a character close to the lead of the name is particularly referred, but a node corresponding to a character close to the end of the name is not referred, among a plurality of nodes constituting the retrieval tree data. Only the node of which the reference frequency is low is selectively compressed to reduce the size of the database stored in the car navigation without impairing the user's operability.

In addition, when the retrieval tree data updating unit updates the retrieval tree data, the data recording unit stores history information such as the number of times or a time to access the node information included in retrieval tree data in the past, and the node information of which the number of access times is small of the stored history information may be set as the compression target. As such, by determining the data to be compressed according to the history of the access to the node information, the compressed data may be set more efficiently.

The present invention is not limited to only the embodiments, but in the execution step, the components may be transformed and actualized within the scope without departing from the spirit thereof. For example, the retrieval method or the compression method disclosed in the first embodiment and the second embodiment may be, of course, appropriately combined or implemented in all selectable formats.

## Claims

1. A retrieval terminal device connected to a retrieval server device through a communication network, comprising:
a retrieval tree data storing unit configured to store node information corresponding to the relationship between information configuring data to be retrieved and information of a lower layer configuring the data than the information and retrieval tree data corresponding to entity identification information for identifying entity data representing an entity of the data to be retrieved which is specified by the information or the lower information included in the node information;
an input controlling unit configured to output a candidate of the data to be retrieved based on the information or the lower information inputted by a user and the node information stored in the retrieval tree data unit; and
an entity data acquiring unit configured to transmit to the retrieval server device a retrieval request including the entity identification information corresponding to the information or the lower information included in the candidate of the data to be retrieved, which is output by the input controlling unit and acquire the entity data identified by the entity identification information from the retrieval server device.

2. The retrieval terminal device according to claim 1, further comprising:
a candidate name setting unit configured to display the candidate of the data output by the input controlling unit on a display unit,
wherein the input controlling unit accepts designation of the candidate of the data displayed on the display unit, and
the entity data acquiring unit transmits to the retrieval server device the retrieval request including the entity identification information corresponding to the information or the lower information included in the candidate of the data accepted by the input controlling unit.

3. The retrieval terminal device according to claim 1, further comprising:
a keyboard controlling unit configured to enable a key to be pressed, the key corresponding to information inputtable next to the information or the lower information which is input, among keys displayed on a keyboard display unit, based on the information or the lower information inputted from the user and the node information stored in the retrieval tree data storing unit,
wherein the input controlling unit accepts the pressing of the key corresponding to the next inputtable information, which is displayed on the keyboard display unit, and
the entity data acquiring unit transmits to the retrieval server device the retrieval request including the entity identification information corresponding to the information or the lower information included in the key accepted by the input controlling unit.

4. The retrieval terminal device according to one of claims 1 to 3, further comprising:
a retrieval tree validity judging unit configured to judge validity of the retrieval tree data by comparing a predetermined validity term of the retrieval tree data with a current time; and
a retrieval tree data updating unit configured to acquire retrieval tree data after updating from the retrieval server device and store the retrieval tree data after updating in the retrieval tree data storing unit, when the retrieval tree validity judging unit judges that the retrieval tree data is not valid.

5. The retrieval terminal device according to one of claims 1 to 4, wherein the entity data acquiring unit displays on the display unit an instruction that the retrieval device and the retrieval server are in communication with each other at the time of acquiring the entity data from the retrieval server device.

6. A retrieval server device receiving a retrieval request of data to be retrieved from a retrieval terminal device through a communication network, comprising:
an entity data storing unit configured to store a plurality of entity identification information pieces for identifying entity data representing an entity of the data to be retrieved and the entity data which correspond to each other; and
an entity data managing unit configured to retrieve the data to be retrieved from a plurality of entity data pieces stored in the entity data storing unit based on entity identification information for identifying the data to be retrieved which is specified by information and lower information included in node information corresponding the relationship between the information configuring the data to be retrieved and the lower information configuring the data than the information and the number of candidates of the data to be retrieved which is specified by the information or the lower information, which is included in the retrieval request.

7. The retrieval server device according to claim 6, further comprising:
an update retrieval tree data recording unit configured to record the latest retrieval tree data; and
a retrieval tree data managing unit configured to transmit the latest retrieval tree data to the retrieval terminal device, based on an update request of the retrieval tree data received from the retrieval terminal device.

8. A retrieval tree compressing method of compressing retrieval tree data, comprising:
a node information listing step of listing a plurality of node information pieces corresponding to the relationship between information configuring data to be retrieved and lower information configuring the data than the information in a predetermined order;
a node information classifying step of classifying the plurality of node information pieces listed in the node information listing step into two or more groups; and
a node information compressing step of performing different data compression processing or uncompression processing to two or more respective groups classified in the node information classifying step, respectively.

9. The retrieval tree compressing method according to claim 8, wherein in the node information listing step, layers between one node information piece and another node information piece in the retrieval tree data are compared with each other to arrange node information.

10. The retrieval tree compressing method according to claim 8 or 9, wherein in the node information compressing step, the data compression processing or the uncompression processing is executed, based on distribution of the information or the lower information included in node information of each layer in the node information.

11. The retrieval tree compressing method according to claim 10, wherein in the node information compressing step, the node information included in a range where a time required to decompress compressed data is equal to or less than a predetermined threshold value is set as a compression target, in the distribution of the information or the lower information.

12. The retrieval tree compressing method according to claim 8, wherein in the node information listing step, the number of data pieces to be retrieved, which is displayed by the information or the lower information included in the node information, is compared with each other to arrange the node information.

13. The retrieval tree compressing method according to claim 8 or 9, wherein in the node information compressing step, the data compression processing or the uncompression processing is executed, based on the number of characters included in the node information of each layer in the node information.

14. The retrieval tree compressing method according to claim 13, wherein in the node information compressing step, the node information of the number of characters in which the time required to decompress the compressed data is equal to or less than the predetermined threshold value among the numbers of characters is set as a compression target.

15. The retrieval tree compressing method according to one of claims 8 to 14, wherein in the node information compressing step, the node information in which the number of access times to the node information is small is set as the compression target, based on a history of access to the node information included in the retrieval tree data in the past.
